# EUROPÄISCHE PATENTSCHRIFT

(11) **EP 1 981 694 B1**
(45) Veröffentlichungstag und Bekanntmachung des Hinweises auf die Patenterteilung: **25.04.2012**
(21) Anmeldenummer: 06829678.9
(22) Anmeldetag: 16.12.2006
(51) Int. Cl.: B29C 49/00, B29C 51/12, B29C 49/20, B29C 69/00, B29C 51/00, B60K 15/03, B29C 65/02, B29C 65/60

(54) **VERFAHREN ZUR HERSTELLUNG EINES KUNSTSTOFF-HOHLKÖRPERS**
METHOD FOR PRODUCING A PLASTIC HOLLOW BODY
PROCÉDÉ DE FABRICATION D'UN CORPS CREUX EN PLASTIQUE

(30) Priorität: 10.02.2006 DE 102006006469
(43) Veröffentlichungstag der Anmeldung: 22.10.2008
(60) Teilanmeldung: 09013838.9
(73) Patentinhaber: Kautex Textron GmbH & Co. KG., 53229 Bonn (DE)
(72) Erfinder: BIENHÜLS, Deniz, 53578 Windhagen (DE); BORCHERT, Matthias, 53179 Bonn (DE); EULITZ, Dirk, 53115 Bonn (DE); GEBERT, Klaus, 47877 Willich (DE); KRÄMER, Timo, 57635 Hirz-Maulsbach (DE); LORENZ, Harald, 53474 Bad Neuenahr-Ahrweiler (DE); LÖWER, Robert, 53359 Rheinbach (DE); MEHREN, Christoph, 53639 Königswinter (DE); WOLTER, Gerd, 53639 Königswinter (DE)
(74) Vertreter: Polypatent
(86) Internationale Anmeldenummer: PCT/EP2006/012152
(87) Internationale Veröffentlichungsnummer: WO 2007/090453

(56) Entgegenhaltungen:
- EP-A- 0 103 832
- EP-A- 0 306 643
- EP-A- 1 484 173
- US-A- 2 300 594
- US-A- 3 458 618

## Beschreibung

Die Erfindung betrifft ein Verfahren zur Herstellung eines Kunststoff-Hohlkörpers mit den Merkmalen des Anspruchs 1.

Zur Herstellung von Hohlkörpern aus thermoplastischem Material sind verschiedenste Herstellungsverfahren bekannt, beispielsweise Extrusionsblasformen, Tiefziehen oder Spritzgießen. Beim Extrusionsblasformverfahren kann der Hohlkörper beispielsweise aus einem einzigen schlauchförmigen Vorformling nahtlos hergestellt worden sein. Es besteht allerdings auch die Möglichkeit, einen schlauchförmigen Vorformling der Länge nach in Bahnen aufzuteilen, die Bahnen separat in ein zwei- oder mehrteiliges Werkzeug einzulegen und innerhalb des Werkzeugs mittels Unterdruck oder durch Gasdruckbeaufschlagung aufzuweiten bzw. umzuformen.

Insbesondere bei der Herstellung von technischen Bauteilen wie Kraftstoffbehältern, die in der zuvor beschriebenen Art und Weise ein- oder mehrteilig aus thermoplastischem Kunststoff hergestellt werden, ist es erforderlich, diverse Einbauteile oder Anbauteile an dem Hohlkörper zu befestigen. Dies kann in der ersten Hitze beim Herstellungsvorgang oder auch nachträglich erfolgen. Soll der Hohlkörper die Einbauteile in seinem Inneren aufnehmen, ist es oftmals aufgrund der Größe der Einbauteile erforderlich, diese bei der Herstellung des Hohlkörper in diesen einzubringen. Die ein- oder anzubringenden Ein- und Anbauteile können mit dem Hohlkörper verklippst oder verschweißt werden, wobei das Verschweißen bei der Herstellung des Hohlkörpers in der ersten Hitze oder nachträglich in der zweiten Hitze, beispielsweise durch Reibschweißen oder Spiegelschweißen, erfolgen kann.

Den formschlüssigen Verankerungen eines Einbauteils im Inneren des Hohlkörpers sind oftmals durch dessen Herstellungsverfahren Grenzen gesetzt. Beispielsweise ist es bei Herstellung von Hohlkörpern im Extrusionsblasformverfahren nur eingeschränkt möglich, in der Kontur des Hohlkörpers Hinterschneidungen vorzusehen, die eine formschlüssige Verriegelung von Einbauten mit der Wandung des Hohlkörpers ermöglichen. Aus diesem Grund wird häufig auf die Verschweißung als Verbindungstechnik zurückgegriffen.

Das Verschweißen der Bauteile miteinander ist jedoch mit dem Nachteil behaftet, dass die zu verbindenden Kunststoffe eine miteinander verschweißbare Materialpaarung bilden müssen. Hierdurch ist die Auswahl der Ein- oder Anbauteile für den Hohlkörper beschränkt.

Beispielsweise bei der Herstellung von Kraftstoffbehältern aus Kunststoff kann dies eine weitreichende Einschränkung darstellen, da bestimmte Kunststoffe in Anwesenheit von Kraftstoff Quellen bzw. für Kohlenwasserstoffe permeabel sind. Für bestimmte Leitungen und Ventile ist daher eine Materialauswahl erforderlich, die die Möglichkeit des Verschweißens mit dem Behälter bzw. mit dem Hohlkörper von vorneherein ausschließt.

Ein Verfahren zur Herstellung eines Einbauten umschließenden Artikels ist beispielsweise aus EP-A-01 033 832 bekannt, wobei nach dem dort beschriebenen Verfahren vorgesehen ist, das Einbauteil mittels einer längsverschiebbaren Haltevorrichtung in der offenen Blasform zu halten und in den Vorformling einzubringen. Vor dem Aufblasen des Vorformlings wird das Einbauteil von einem den Vorformling einseitig durchstechenden Haltedom übernommen und die Haltevorrichtung wird aus der Blasform zurückgezogen.

Aus der EP 1 484 173 A2 ist ein Verfahren zur Verbinden mehrerer Bahnen aus thermoplastischem Kunststoff bekannt, wobei das Material einer Bahn durch eine Lochung einer darunter liegenden Bahn mittels Vakuum im schmelzflüssigen Zustand eingezogen wird, sodass auf diese Art und Weise eine Art Nietverbindung gebildet wird.

Der Erfindung liegt daher die Aufgabe zugrunde, ein Verfahren der eingangs genannten Art im Hinblick auf die zuvor beschriebenen Nachteile zu vereinfachen.

Die Aufgabe wird gelöst durch ein Verfahren nach den Merkmalen des Anspruchs 1. Vorteilhafte Ausgestaltungen sind dem Unteranspruch zu entnehmen.

Auf diese Art und Weise kann mit verhältnismäßig einfachen Mitteln eine formschlüssige Verankerung des Einbauteils mit der Wandung des Hohlkörpers erreicht werden. Die Innenwandung des Hohlkörpers durchdringt und hinterfließt eine Verankerungsöffnung des Einbauteils, so dass nach Erkalten der Bauteile eine formschlüssige und unlösbare Verbindung erzielt wurde. Eine Kompatibilität der Materialien im Sinne einer Verschweißbarkeit der Teile ist nicht erforderlich. Das Einbauteil kann beispielsweise auch aus Metall oder einem anderen Werkstoff bestehen.

Durch die Formgebung der Öffnung des Einbauteils bildet das durch diese Öffnung in das Einbauteil hineinfließende Material der Wandung des Hohlkörpers vorzugsweise einen Kopf aus, der ähnlich wie ein Nietkopf die Verbindung hält.

Das Andrücken des Einbauteils an die Innnenwandung des Artikels erfolgt bei einer bevorzugten Variante des Verfahrens ohne verlorene Hilfsmittel, die etwa nach Fertigstellung des Artikels aus diesem wieder entfernt werden müssten.

Bei einer besonders bevorzugten Variante des Verfahrens gemäß der Erfindung wird der Kopf der Verbindung ohne Hilfsmittel zur Umlenkung (Zuhalten des in die Öffnung fließenden Kunststoffs der Wandung des Hohlkörpers) ausgebildet.

Bei dem Verfahren gemäß der Erfindung werden zwei bahnförmige Vorformlinge zwischen die geöffneten Hälften einer zweigeteilten Blasform extrudiert, wobei die Formhälften zunächst gegen einen zwischen diesen angeordneten Einbauträger-Rahmen geschlossen werden, innerhalb des Einbauträger-Rahmens Mittel zur Positionierung von Einbauteilen angeordnet sind, mit welchen das Einbauteil aus der Rahmenebene hinaus gegen die Innenwandung des Artikels gepresst wird, und wobei in einem weiteren Verfahrensschritt der Einbauteilträger-Rahmen entfernt und die Formhälften zur Fertigstellung des Artikels gegeneinander geschlossen werden. Mit letzterem Verfahrensschritt wird eine Verschweißung der beiden Hälften des Artikels noch in der ersten Hitze erzielt.

Es ist für den Fachmann verständlich, dass anstelle eines Einbauträgerrahmens auch eine Einbauträgerplatte vorgesehen sein kann. Der Einbauträgerrahmen muss darüber hinaus nicht notwendigerweise als offenes oder geöffnetes Element ausgebildet sein.

Es zeigen:
- Figuren 1 und 2:: eine schematische Ansicht der Verbindung eines Einbauteils mit der Wandung des Hohlkörpers und
- Figuren 3 bis 12:: eine schematische Darstellung des Herstellungsverfahrens eines Kraftstoffbehälters aus Kunststoff gemäß der Erfindung.

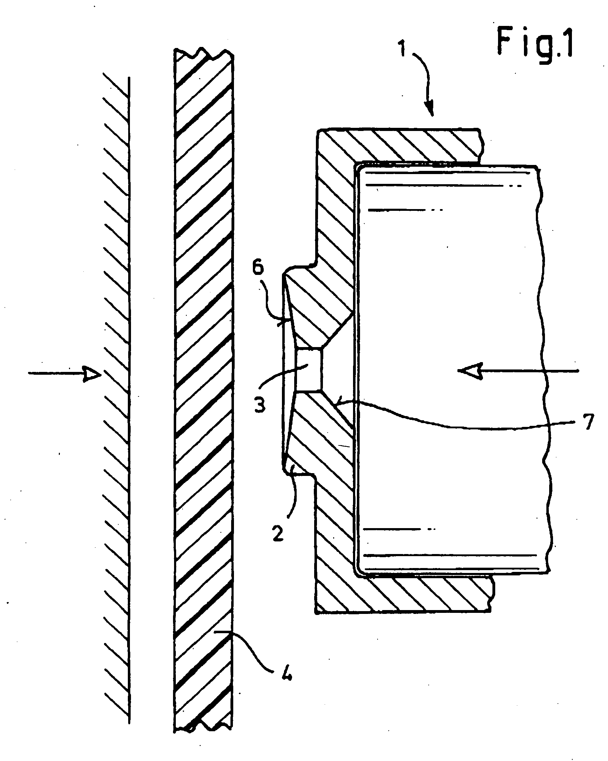

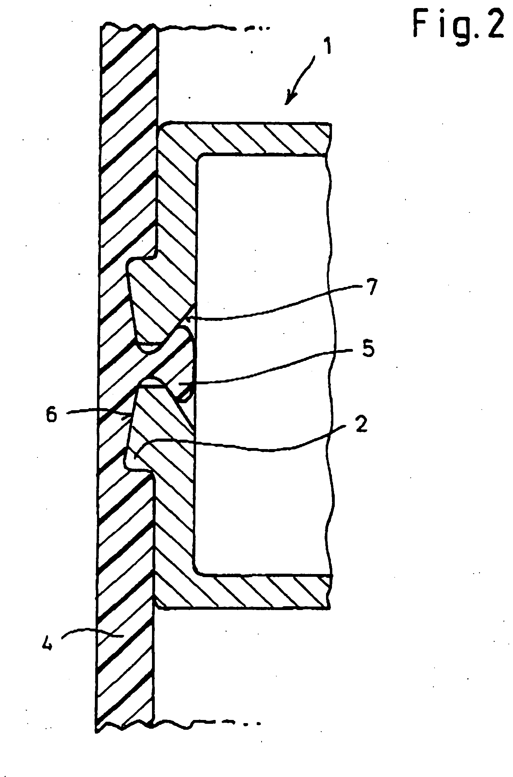

Wie in den Figuren 1 und 2 sehr vereinfacht dargestellt ist, besitzt das im Schnitt dargestellte Einbauteil 1 ein Fußelement 2 mit einer Durchtrittsöffnung 3.

Wie bereits vorstehend erwähnt, wird das erfindungsgemäße Verfahren nachfolgend beispielsweise anhand der Herstellung eines Kraftstoffbehälters aus Kunststoff erläutert. Die Erfindung ist jedoch so zu verstehen, dass jedweder Hohlkörper hergestellt werden kann. Die Verbindung kann sowohl innerhalb als auch außerhalb des Hohlkörpers realisiert werden. Im vorliegenden Fall ist das Einbauteil 1 als Schwalltopf eines Kraftstoffbehälters ausgebildet.

Das in Figur 1 dargestellte Einbauteil 1 wird mit seinem Fußelement 2 gegen die Wandung 4 des herzustellenden Hohlkörpers gedrückt, und zwar wenn das Kunststoffmaterial der Wandung 4 sich noch oder wieder im plastischen Zustand befindet. Bei dem nachstehend beschriebenen Herstellungsverfahren erfolgt die Verbindung in der ersten Hitze bei der Herstellung des Hohlkörpers, so dass das Material der Wandung 4 sich noch im schmelzflüssigen Zustand befindet und bei Ausübung von hinreichendem Druck auf das Fußelement 2 in Richtung des in Figur 1 rechts dargestellten Pfeiles den in Figur 2 gezeigtem Kopf 5 ausbildet, der die Durchtrittsöffnung 3 des Einbauteils 1 hintergreift. Die Durchtrittsöffnung 3 ist vorzugsweise als kreisrunde Bohrung ausgebildet, die an ihrem der Wandung 4 abliegenden Ende hinterschnitten bzw. angefast ist.

Das Fußelement 2 hat zwecks Verbesserung des Fließverhaltens des plastischen Materials eine konkave Kontaktfläche 6, die zentral, d. h. an der tiefsten Stelle ihrer Muldung, von der Durchtrittsöffnung 3 durchsetzt wird. Diese Formgebung der Kontaktfläche 6 und des Fußelements 2, das in Bezug auf das Einbauteil 1 abgesetzt ist, begünstigt das Fließverhalten der Schmelze durch die Durchtrittsöffnung 3. Durch die stempelförmige, abgesetzte Ausbildung des Fußelements 2 wird bei gegebener Presskraft die Flächenpressung im Bereich der Kontaktfläche erhöht. Die konkave Ausbildung der Kontaktfläche in Verbindung mit der dort auftretenden erhöhten Flächenpressung bewirkt eine Führung der Schmelze in die Durchtrittsöffnung 3.

Die Durchtrittsöffnung 3 ist auf ihrer der Kontaktfläche 6 abgewandten Seite mit einer Hinterschneidung 7 versehen, die als Widerlager für den Kopf 5 dient. Letzterer bildet sich auch aus, wenn die Hinterschneidung 7 nicht vorhanden ist, dann ist es unter Umständen erforderlich, die Dicke des Fußelements 2 kleiner zu wählen.

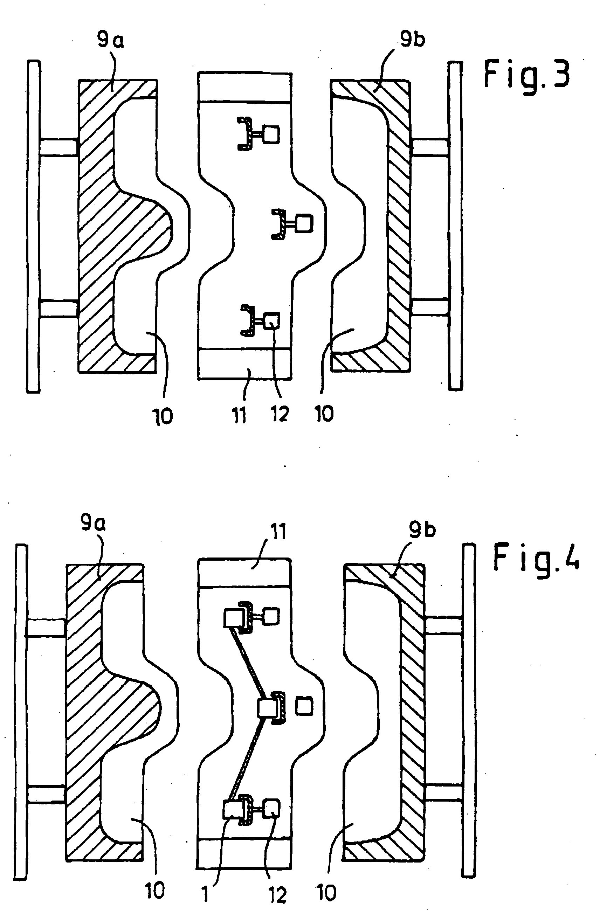

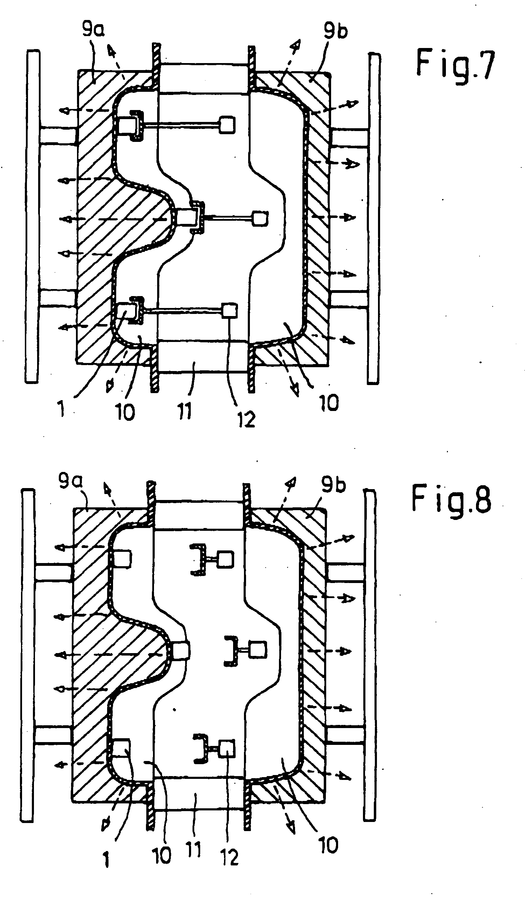

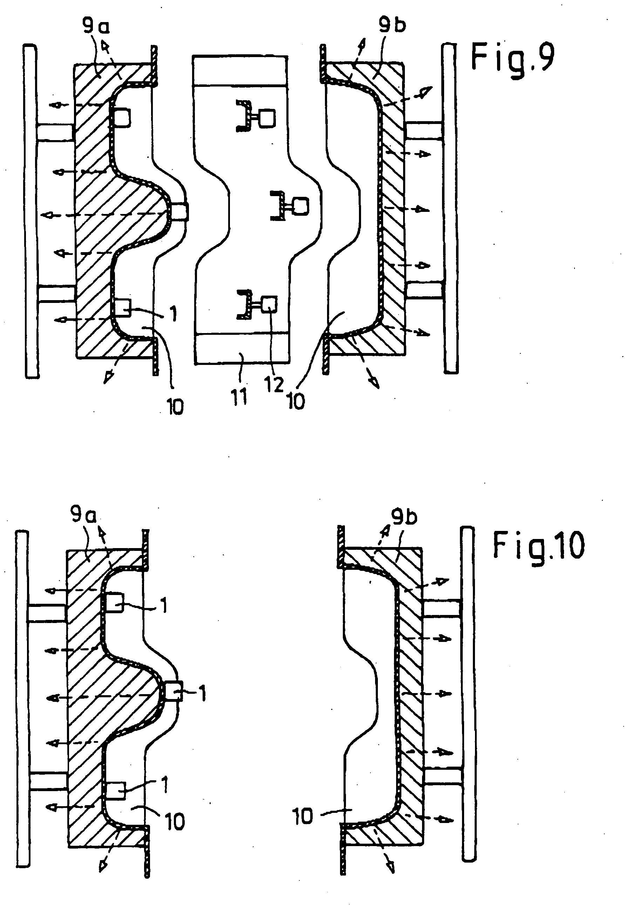

Wie bereits vorstehend erwähnt, ist das Verfahren gemäß der Erfindung in den Figuren 3 bis 12 schematisch dargestellt.

Das Verfahren gemäß der Erfindung umfasst die Herstellung des Artikels 8 als Kraftstoffbehälter durch Extrusionsblasformen.

Das Formwerkzeug umfasst zwei Formhälften 9a, 9b, die komplementär zueinander ausgebildet sind und im geschlossenen Zustand ein Formnest 10 begrenzen, das die äußere Gestaltung des fertigzustellenden Artikels 8 bestimmt. Zwischen den Formhälften 9a, 9b wird ein Einbauträger-Rahmen 11 platziert, der zwischen den Formhälften 9a, 9b verfahrbar angeordnet ist. Innerhalb des Einbauträger-Rahmens 11 sind Einbauteil-Halter 12 lageveränderbar angeordnet. Diese sind innerhalb des Einbauträger-Rahmens 11 hydraulisch oder pneumatisch in der Ebene des Einbauträger-Rahmens und quer hierzu verfahrbar bzw. verstellbar. Die Einbauteil-Halter 12 werden, wie dies in Figur 4 dargestellt ist, mit Einbauteilen 1 bestückt. Im vorliegenden Fall sind die Einbauteile 1 über eine nicht näherbezeichnete Leitung miteinander verbunden. Jede der Einbauteile hat in etwa die in den Figuren 1 und 2 dargestellte Konfiguration.

Nachdem der Einbauträger-Rahmen 11 zwischen den Formhälften 9a, 9b positioniert wurde, werden aus einem oder mehreren nicht dargestellten Extrusionsköpfen bahnförmige Vorformlinge 13 zwischen die geöffneten Formhälften 9a, 9b extrudiert. Es ist ebenso möglich, die Vorformlinge 13 nicht am Aufstellungsort des Werkzeugs sondern hiervon entfernt zu extrudieren und mit einer Handhabungsvorrichtung zwischen die geöffneten Formhälften 9a, 9b zu bringen.

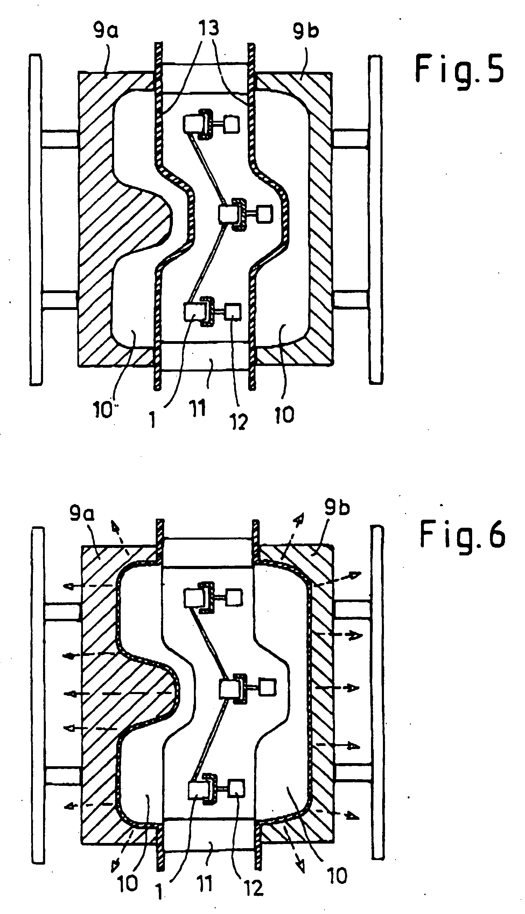

Die Vorformlinge 13 erstrecken sich in der in den Figuren 5 und 6 dargestellten Lage jeweils zwischen einer Formhälfte 9a, 9b und dem Einbauträger-Rahmen 11. In einem weiteren Verfahrensschritt werden die Vorformlinge mittels Unterdruck an die Kontur der Formhälften 9a, 9b im Formnest 11 angelegt. Dies kann mit dem Schließen der Formhälften 9a, 9b gegen den Einbauträger-Rahmen 11 oder auch bereits vorher erfolgen.

Mit Hilfe von Unterdruck oder auch Überdruck werden die Vorformlinge 13 vollständig an die Kontur des Formnestes 10 angelegt.

Sodann fahren die Einbauteil-Halter 12 aus der Rahmenebene hinaus und pressen die Einbauteile 1 gegen die Wandung 4 des Artikels 8 bzw. gegen die an dem Formnest 10 anliegenden Vorformlinge. Es kommt die zuvor beschriebene Verankerung der Einbauteile 1 mit der Wandung 4 des Artikels 8 zustande.

Sodann fahren die Einbauträger-Halter 12 in ihre Ausgangslage zurück. Die Formhälften werden auseinandergefahren, wobei die zuvor gebildeten Halbschalen des Artikels 8 im Formnest verbleiben. Der Einbauträger-Rahmen 11 wird zwischen den Formhälften 9a, 9b weggefahren, das Werkzeug schließt erneut und verschweißt die beiden Halbschalen des Artikels miteinander.

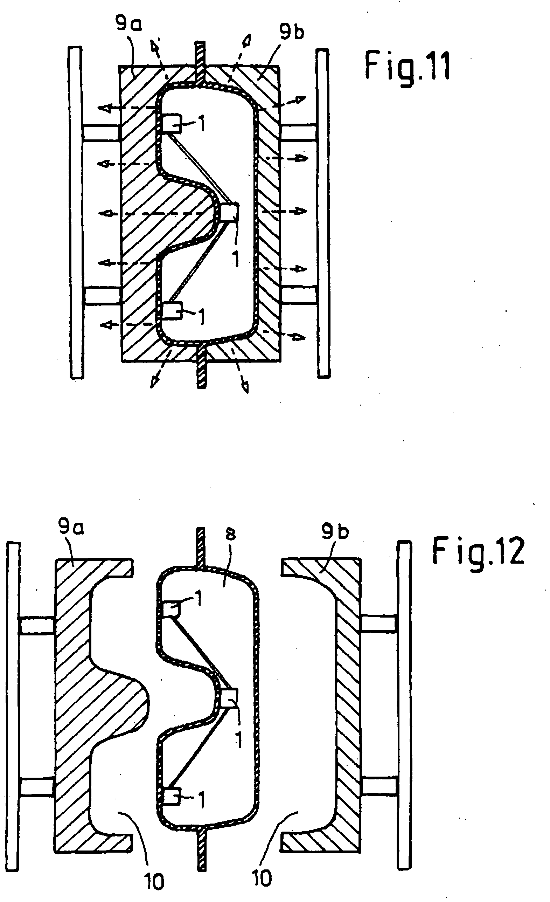

In den Figuren 11 und 12 ist das Ausformen und Entnehmen des fertigen Artikels 8 schematisch dargestellt.

### Bezugszeichenliste

- 1.: Einbauteil
- 2.: Fußelement
- 3.: Durchtrittsöffnung
- 4.: Wandung
- 5.: Kopf
- 6.: Kontaktfläche
- 7.: Hinterschneidung
- 8.: Artikel
- 9a, 9b: Formhälften
- 10.: Formnest
- 11.: Einbauträger-Rahmen
- 12.: Einbauteil-Halter
- 13.: Vorformlinge

## Patentansprüche

1. Verfahren zur Herstellung eines Einbauten umschließenden Artikels (8) als Hohlkörper aus thermoplastischem Kunststoff, bei welchem zwei bahnförmige Vorformlinge aus plastifiziertem Kunststoff zwischen die geöffneten Teile eines eine Kavität bildenden Formwerkzeugs gebracht werden, wenigstens ein von dem fertigen Artikel (8) zu umschließendes Einbauteil (1) zwischen den Teilen des Formwerkzeugs platziert wird und das Werkzeug um die Vorformlinge (13) und das Einbauteil (1) geschlossen wird und die Vorformlinge (13) innerhalb der von dem Werkzeug umschlossenen Kavität die äußere Gestalt des Artikels (8) erhalten, wobei das Einbauteil (1) während oder unmittelbar nach der Ausformung gegen die Innenwandung des noch plastischen Artikels (8) gedrückt wird, so dass der Kunststoff des Hohlkörpers wenigstens eine Ausnehmung oder Öffnung des Einbauteils (1) durchdringt und hinterfließt, wobei zwei bahnförmige Vorformlinge (13) zwischen die geöffneten Hälften (9a,9b) einer zweigeteilten Blasform angeordnet oder extrudiert werden, wobei die Formhälften (9a,9b) zunächst gegen einen zwischen diesen angeordneten Einbauträger-Rahmen (11) geschlossen werden, innerhalb des Einbauträger-Rahmens (11) Mittel zur Positionierung von Einbauteilen (1) angeordnet sind, mit welchen das Einbauteil (1) aus der Rahmenebene heraus gegen die Innenwandung des Artikels (8) gepresst wird, und wobei in einem weiteren Verfahrensschritt der Einbauträger-Rahmen (11) entfernt wird und die Formhälften (9a,9b) zur Fertigstellung des Artikels (8) gegeneinander geschlossen werden.

2. Verfahren nach Anspruch 1, **dadurch gekennzeichnet dass** das Andrücken des Einbauteils (1) an die Innenwandung des Artikels (8) ohne verlorene Hilfsmittel erfolgt.

## Claims

1. Process for manufacturing an article (8) in the form of a hollow body made of thermoplastic material which encloses internal fittings and in which two parisons in web form made of plasticized plastic are inserted between the open parts of a moulding tool forming a cavity, at least one built-in part (1) which is to be enclosed by the finished article (8) is placed between the parts of the moulding tool and said tool is closed around the parisons (13) and the built-in part (1) and the outer shape of the article (8) is imparted to said parisons (13) inside the cavity enclosed by the tool, the built-in part (1) being pressed against the inner wall of the still-plastic article (8) during, or immediately after, the shaping, so that the plastic of the hollow body passes through, and flows behind, at least one clearance or opening in the built-in part (1), wherein two parisons (13) in web form are arranged or extruded between the open halves 9a, 9b) of a blow mould which is divided in two, wherein the mould-halves (9a, 9b) are initially closed against a built-in carrier frame (11) arranged between them, there are arranged, inside said built-in carrier frame (11), means for positioning built-in parts (1), with the aid of which means the built-in part (1) is pressed out of the plane of the frame against the inner wall of the article (8), and wherein the built-in carrier frame (11) is removed in a further process step and the mould-halves (9a, 9b) are closed against one another for the purpose of finishing the article (8).

2. Process according to claim 1, **characterised in that** the pressing of the built-in part (1) against the inner wall of the article (8) takes place without lost auxiliaries.

## Revendications

1. Procédé de fabrication d'un article (8) entourant des éléments internes, sous forme d'un corps creux en un matériau thermoplastique, dans lequel deux préformes en forme de bande continue, constituées d'un matériau plastique plastifié, sont placées entre les parties ouvertes d'un moule formant une cavité, au moins un élément interne (1), destiné à être entouré par l'article fini (8), étant placé entre les parties du moule, et le moule étant fermé autour des préformes (13) et de l'élément interne (1), et les préformes (13), à l'intérieur de la cavité entourée par le moule, prenant la forme extérieure de l'article (8) ; l'élément interne (1), pendant ou immédiatement après le démoulage, étant pressé contre la paroi intérieure de l'article (8) encore plastique, de telle sorte que le plastique du corps creux traverse au moins un évidement ou une ouverture aménagé dans la pièce interne (1) et s'écoule par derrière, deux préformes (13) en forme de bande continue étant disposées ou extrudées entre les moitiés ouvertes (9a, 9b) d'un moule de soufflage en deux parties, les moitiés du moule (9a, 9b) étant d'abord fermées contre un cadre (11), porteur d'éléments internes, disposé entre ces moitiés, des moyens destinés à positionner les éléments internes (1) étant disposés à l'intérieur du cadre (11) porteur d'éléments internes, moyens à l'aide desquels l'élément interne (1) est pressé, en étant extrait du plan du cadre, contre la paroi intérieure de l'article (8), et, dans une autre étape du procédé, le cadre (11) porteur d'éléments internes étant enlevé_{,} et les moitiés de moule (9a, 9b) étant, pour la finition de l'article (8), fermées l'une contre l'autre.

2. Procédé selon la revendication 1, **caractérisé en ce que** l'opération consistant à presser l'élément interne (1) contre la paroi intérieure de l'article (8) s'effectue sans moyens auxiliaires perdus.
